(19) Europäisches Patentamt
European Patent Office
Office européen des brevets

(11) **EP 3 158 248 B1**

(12) **EUROPEAN PATENT SPECIFICATION**

(45) Date of publication and mention
of the grant of the patent:
**22.07.2020  Bulletin 2020/30**

(51) Int Cl.:
*F16L 15/00* *(2006.01)*    *E21B 33/038* *(2006.01)*
*F16L 29/04* *(2006.01)*    *F16K 17/02* *(2006.01)*

(21) Application number: **15730776.0**

(86) International application number:
**PCT/EP2015/063874**

(22) Date of filing: **19.06.2015**

(87) International publication number:
**WO 2015/193496 (23.12.2015 Gazette 2015/51)**

(54) **POPPET VALVE ARRANGEMENT**

TELLERVENTILANORDNUNG

AGENCEMENT DE SOUPAPE-CHAMPIGNON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2014  NO 20140775**

(43) Date of publication of application:
**26.04.2017  Bulletin 2017/17**

(73) Proprietor: **Connector Subsea Solutions AS
5257 Kokstad (NO)**

(72) Inventors:
• **STRAND, Asbjørn**
  **N-5004 Bergen (NO)**
• **KARLSEN, Kristian**
  **5724 Stanghelle (NO)**

(74) Representative: **J A Kemp LLP
14 South Square
Gray's Inn
London WC1R 5JJ (GB)**

(56) References cited:
**EP-A1- 1 953 440    DE-A1- 4 340 321
GB-A- 2 493 261**

**Description**

The present disclosure relates to a poppet valve arrangement, such as can be used in a pipe terminal and/or flow coupler. More specifically, aspects relate to a fluid transport system, coupling system, flow coupler and pipe terminals comprising such an arrangement, methods of constructing such terminals and flow couplers, methods of terminating pipes and a method of opening a valve connection between two pipes.

The apparatus and methods disclosed herein can be used in the termination and/or coupling of any fluid-carrying pipes, but are particularly suitable for deep subsea high pressure applications such as hydraulic control systems for oil and gas offshore wells.

A poppet or mushroom valve can be used in a first pipe terminal in such a way that, when coupled to a second pipe terminal, flow can be opened from one pipe into the other, but when the pipe terminals are separated from one another the poppet valve prevents leakage from the end of the first pipe. Poppet valves typically comprise a stopper portion whose default position is sitting within a housing such that a flow channel through that housing is completely closed off. A biasing device such as a spring, fixed to the housing, is generally used to maintain this default position. When first and second terminals are brought together to form a flow coupler, a structure of the second terminal acts against the biasing device to move the stopper portion out of its 'seat' in the housing, opening up flow between the stopper portion and the housing.

Some flow couplers comprise interlocking male and female terminals which, when connected, cause respective poppet valves comprised within each terminal to open one another. To achieve this, each poppet valve comprises an armature extending from its stopper portion which pushes against the armature of the other poppet valve to open it when the terminals are connected.

In such flow couplers, the flow generally runs substantially annularly around the mated poppet armatures and the poppets are supported with respect to the terminal housings by structures on the other side of the stopper sections to the armatures. For example, in some designs the support structure forms a 'cup' extending across a substantially cylindrical flow channel at the pipe end of the terminal, the flow entering said cup axially and exiting it through one or more substantially radial-going apertures to take the flow out annularly around the mated poppets.

The inventors have observed that existing poppet-based flow couplers introduce significant pressure drops and turbulence into fluids flowing through them. What is needed is an improved poppet valve arrangement which reduces these effects.

GB 2 493 261 A discloses background information.

EP 1 953 440 A1 discloses background information.

DE 43 40 321 A1 discloses background information.

According to a first aspect, there is provided a poppet valve arrangement as set out in claim 1.

According to a second aspect there is provided a terminal as set out in claim 6. According to a third aspect there is provided a coupling system as set out in clam 8. According to a fourth aspect there is provided a coupling system as set out in claim 9. According to a fifth aspect there is provided a method of opening a valve connection between first and second fluid-carrying pipes as set out in claim 11. Aspects of the present invention will now be described by way of example with reference to the accompanying figures. In the figures:

Figure 1a illustrates an example poppet valve arrangement when open;
Figure 1b provides a perspective view of the example poppet valve shown in Figure 1a;
Figures 2a and 2b illustrate an example male terminal comprising the poppet valve arrangement of Figure 1a, with the poppet valve closed;
Figures 2c and 2d illustrate an example female terminal comprising the poppet valve arrangement of Figure 1a, with the poppet valve closed;
Figures 2e to 2h illustrate an example flow coupler comprising the male terminal of

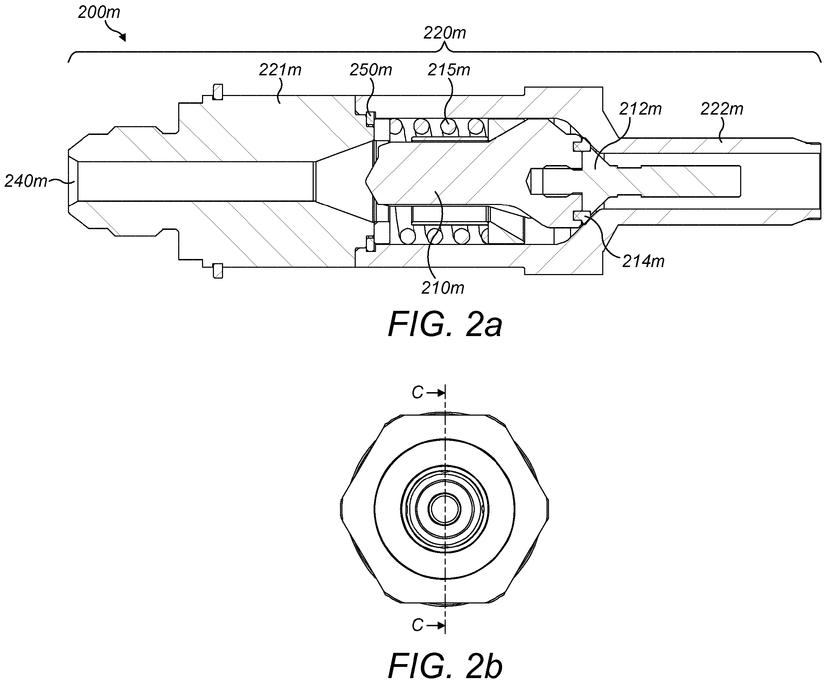

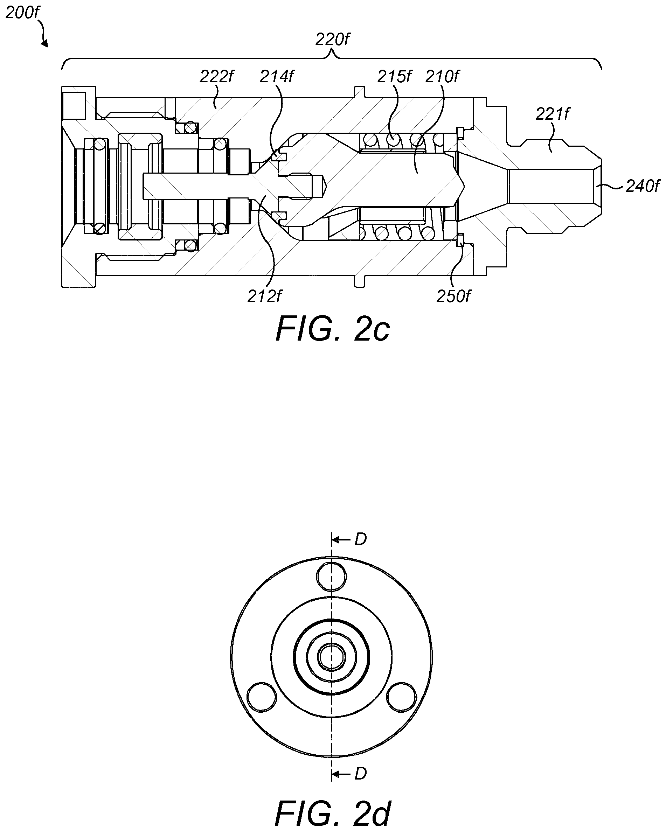

Figures 2a and 2b plugged into the female terminal of Figures 2c and 2d such that their poppet valves open one another;

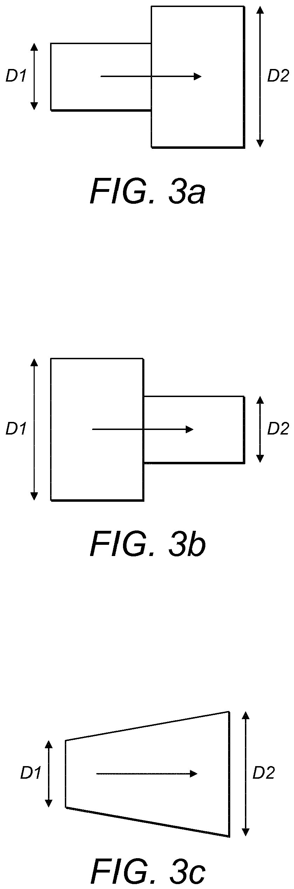

Figures 3a to 3c illustrate different types of flow channel diameter transitions;

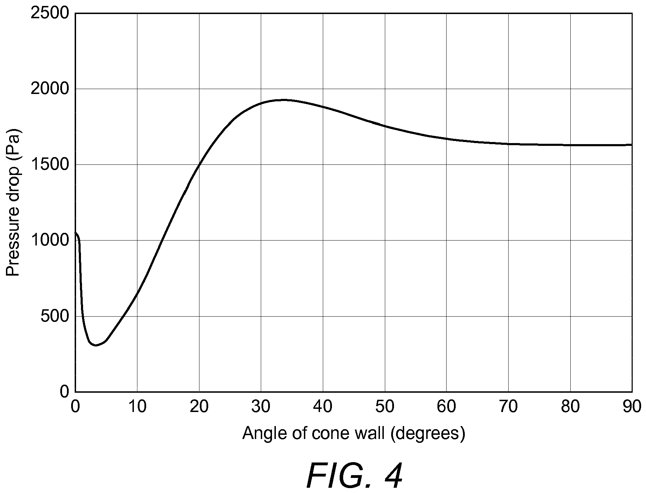

Figure 4 shows the pressure drop expected as a result of a gradual transition between flow channels of different diameters, said transition being characterised by various cone angles;

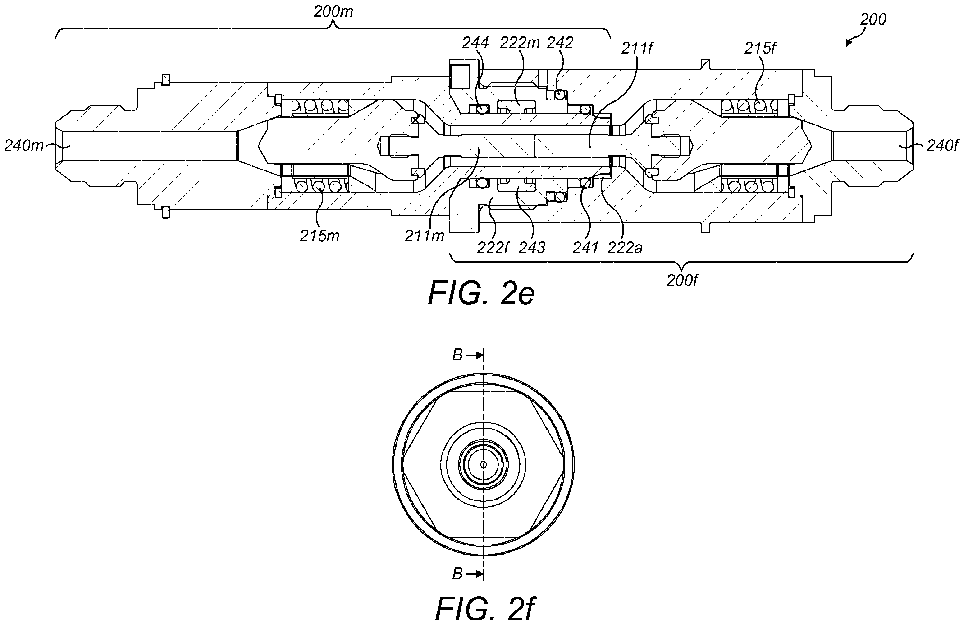

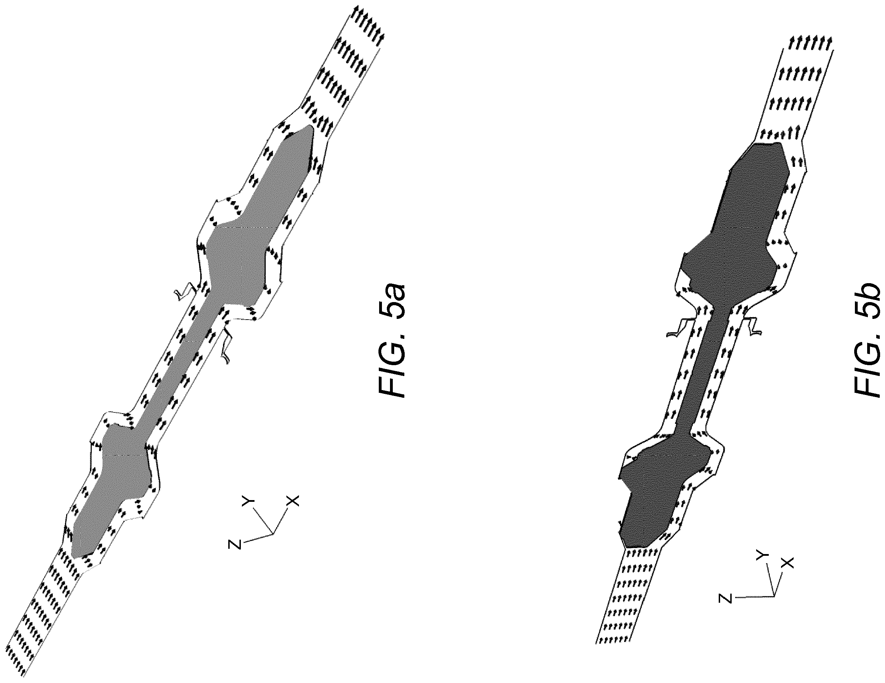

Figures 5a and 5b illustrate a velocity field through the flow coupler of Figures 2e to 2h;

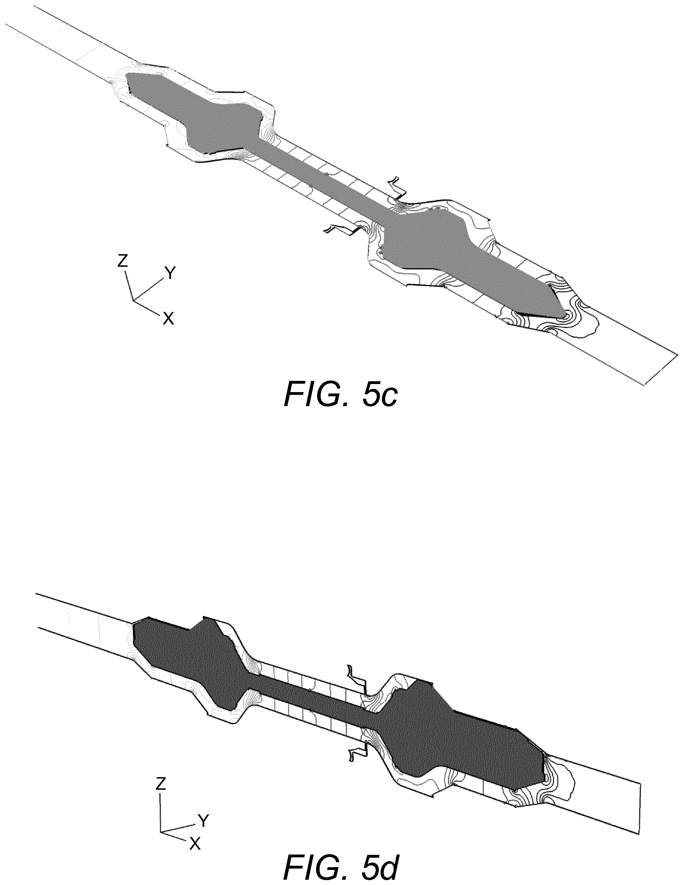

Figures 5c and 5d illustrate a pressure field through the flow coupler of Figures 2e to 2h;

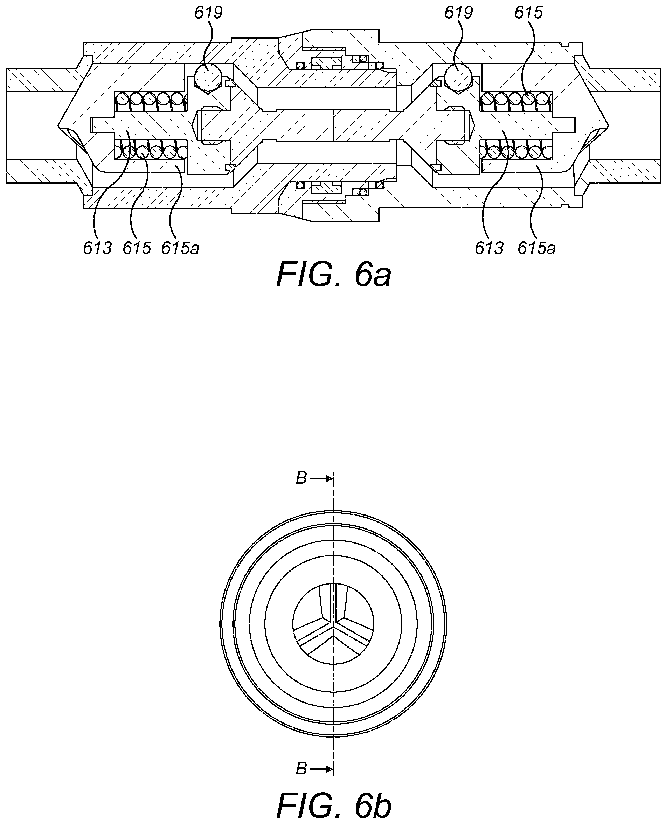

Figures 6a and 6b illustrate another example flow coupler;

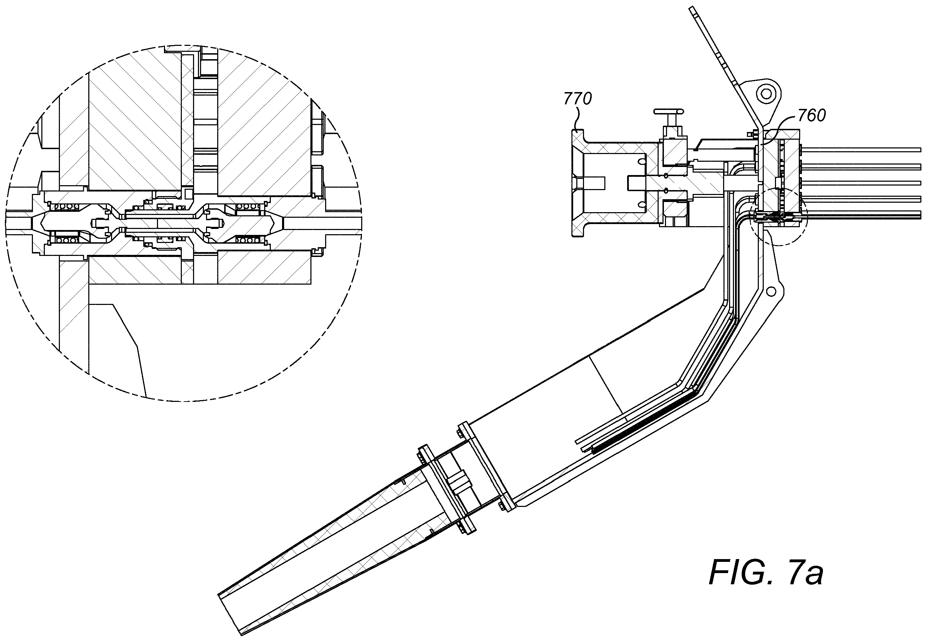

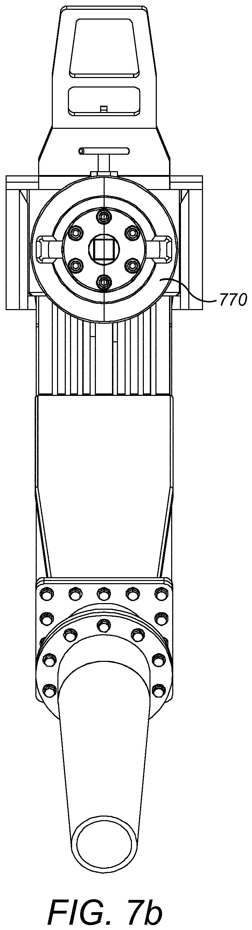

Figures 7a and 7b illustrate example multiple quick connect stab plates for holding a plurality of the flow couplers of Figures 2e to 2h; and

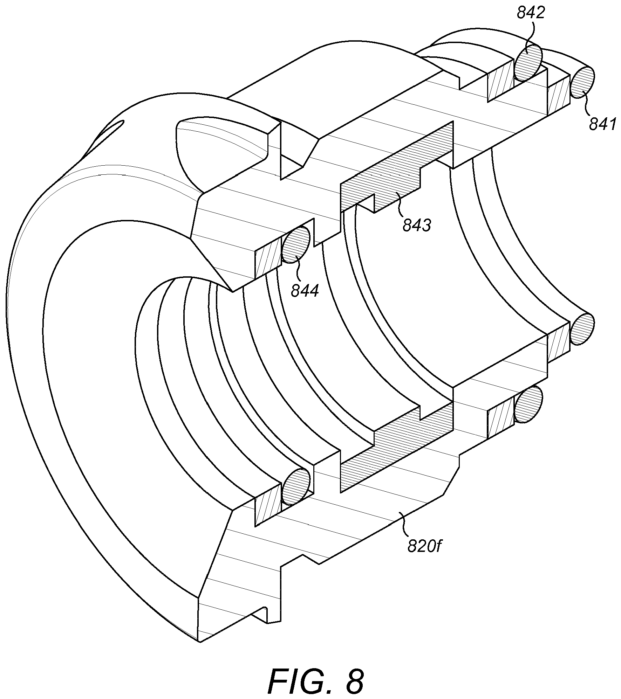

Figure 8 illustrates an example sealing arrangement for the flow coupler of Figures 2e to 2h.

The following description is presented to enable any person skilled in the art to make and use the system, and is provided in the context of a particular application. Various modifications to the disclosed embodiments will be readily apparent to those skilled in the art.

There are described herein examples of poppet valve arrangements in which the poppet valve is supported with respect to its housing by a structure referred to herein as a 'channel splitter'. The channel splitter radially sections the flow channel around at least a portion of the poppet. The present inventors have recognised that it is not required for the structure supporting the poppet valve within the housing to extend all the way across the diameter of the substantially cylindrical flow channel which the poppet valve arrangement interrupts, and thus that the substantially radial-going apertures described above are not required. Squeezing flow through small apertures and sharply changing the flow's direction both result in pressure drops and increased turbulence. In contrast, the example poppet valve arrangements described herein provide much more streamlined flow channels.

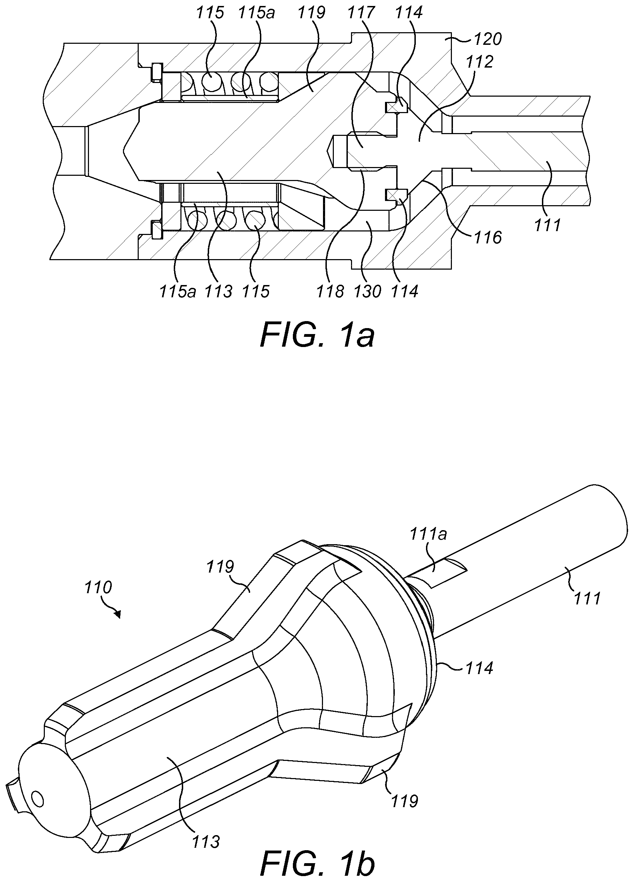

Figure 1a illustrates an example poppet valve arrangement. As shown, the left hand side of the image would connect to a fluid-carrying pipe and the right hand side would either terminate that pipe or connect to another similar poppet valve arrangement to form a flow coupler. The poppet valve is in the open position as illustrated.

Poppet valve 110, which is illustrated (without its spring) in perspective view in Figure 1b, comprises an armature 111, stopper section 112, body section 113, sealing ring 114 and spring 115. Embodiments include other shapes and forms of poppet valve which can perform the same function as the illustrated poppet valve.

Armature 111 is substantially cylindrical. It is rigid enough to push against another similar armature when the poppet valve arrangement is used in a flow coupler.

Stopper section 112 has a truncated cone-shaped exterior profile 116 at its coupler end (adjoining the armature). It has a threaded screw 117 at its pipe end (with the thread indicated by 118).

Body section 113 comprises a correspondingly threaded recess into which screw 117 is screwed. Stopper section 112 and body section 113 are screwed together so as to trap sealing ring 114 between them in a groove circumscribing one or both of the body and stopper sections around the point their external surfaces meet. (One or more features such as recess 111a can be provided on one or more of armature 111, stopper section 112 and body section 113 to facilitate coupling of a tool, or fingers, thereto to screw the body and stopper sections together tightly.) A portion of the external surface of the sealing ring extends slightly radially outwards relative to the body and stopper section external surfaces.

The body section 113 comprises guiding supports in the form of three protrusions 119 from the body section 113, which may be referred to as cams (though they do not undergo substantial rotary motion with respect to the housing), distributed evenly around the circumference of the poppet body (only one being shown in the cross section of Figure 1a).

Helical spring 115 circumscribes the pipe end of the body section 113 and is affixed thereto by the pipe ends of the cams.

The pipe end surface of the body section 113 is formed to encourage smooth fluid flow around it. As shown it is in the form of a rounded cone, but other forms could be used, for example a flared spike that follows a smooth curve down to the body section side surfaces.

The poppet valve 110 is enclosed by a housing 120. Spring 115 is fixed to the interior wall of the housing 120. The profile of the housing substantially matches that of the poppet in the regions not interrupted by the cams. A three way channel 130 is thus formed between the poppet and the housing.

The channel 130 is shielded from spring 115 by a spring cover 115a in the form of a housing or bushing. Turbulence is therefore not introduced to the flow as a result of it being repeatedly interrupted by spring coils. The spring cover could completely enclose the spring, or could deflect the flow away from it so that any fluid surrounding its coils is substantially stagnant, i.e. not part of the main fluid flow through the coupler.

Viewed axially, the channel in the armature region is annular and the channel in the body region is a radially sectioned annulus, the annulus being interrupted at around 0°, 120° and 240° by the cams 119 and the spring cover 115a, which form the channel splitter referred to above. Since the support structure for the poppet overlaps the spring axially, this poppet arrangement is more compact than known arrangements in which the support structure is provided axially adjacent the spring.

The channel, for the entirety of its length, is always between the poppet and the housing, and is never completely enclosed by parts of the poppet. i.e. it always goes around the poppet, never through it. This is in contrast to some known designs of poppet valve arrangements in which the flow is constricted into one or more channels within the poppet itself and then forced through apertures in the poppet to allow it to run annularly around the armature. Such constrictions and apertures introduce changes in flow speed and direction that increase turbulence. The flow channel of the present disclosure flows smoothly around the poppet along as streamlined a route as possible.

The radial width of the each of the three branches of the channel is substantially the same, and is substantially constant along the axial length of the poppet. The walls of the channel are formed of substantially smooth curves.

The shapes, sizes and relative locations of the poppet 110 and housing 120 are chosen such that channel 130 has a substantially constant hydraulic diameter for its entire length. Further, said hydraulic diameter is arranged to be substantially equal to that of two pipes the poppet valve arrangement is intended to couple.

Figures 2a and 2b show the poppet arrangement of Figures 1a and 1b in use in a male pipe terminal 200m, viewed respectively in cross-section through the axis, perpendicular to it (as in Figure 1a), and end-on. The poppet arrangement is shown in Figures 2a and 2b closing off the end of the pipe 240m.

Housing 220m is formed of nozzle 221m, sealed to pipe 240m, and plug 222m, sealed to the nozzle. Nozzle 221m and plug 222m are optionally sealed together by electron beam (EB) welding. A small stop ring 250m can be installed to keep the spring 215m pre-tensioned before welding. Otherwise some device would be necessary to press the parts together during welding, which would be difficult to introduce into the fully automated vacuum chamber EB welding process.

EB welding secures the precision, repeatability and bond durability required for high pressure subsea applications. Once an EB welding procedure has been tuned and qualified for tube welds for use in a subsea environment, nondestructive testing (NDT) on each weld formed by the process is not generally required since EB welding is such a repeatable, reliable technique. Generally, X-ray NDT is required to check for defects in welded joints for use subsea, and as such, the cavity in the region of the joint must be hollow so that shadows of internal components do not confuse the X-ray results. However, since if EB welding is used such NDT is not required, the housing can be made more compact as it is not a problem for the pipe end of the poppet to extend axially into or even beyond the weld region. This saves on material and transport costs, reduces the weight of the terminals and makes them easier to manoeuvre when connecting and disconnecting couplers.

When no external forces act on poppet 210m, the biasing action of spring 215m pushes it towards the coupler end of housing 220m such that stopper section 212m is forced into a narrowing portion of the inner wall of the housing, plugging the channel. If a sufficiently good plug can be achieved through contact between stopper section 212m and the housing inner wall, sealing ring 214m can be omitted. Sealing ring 214m however can be employed to improve the seal between the poppet 210m and housing 220m.

Figures 2c and 2d show the poppet arrangement of Figures 1a and 1b in use in a female pipe terminal 200f, viewed respectively in cross-section through the axis, perpendicular to it (as in Figure 1a), and end-on. The poppet arrangement is shown in Figures 2c and 2d closing off the end of the pipe 240f.

Housing 220f is formed of nozzle 221f, sealed to pipe 240f, and socket 222f, sealed to the nozzle. Nozzle 221f and socket 222f are optionally sealed together by EB welding. As in the male terminal, a small stop ring 250f can be installed to keep the spring 215f pre-tensioned before welding.

When no external forces act on poppet 210f, the biasing action of spring 215f pushes it towards the coupler end of housing 220f such that stopper section 212f is forced into a narrowing portion of the inner wall of the housing, plugging the channel. As for the male terminal, if a sufficiently good plug can be achieved through contact between stopper section 212f and the housing inner wall, sealing ring 214f can be omitted. Sealing ring 214f however can be employed to improve the seal between the poppet 210f and housing 220f.

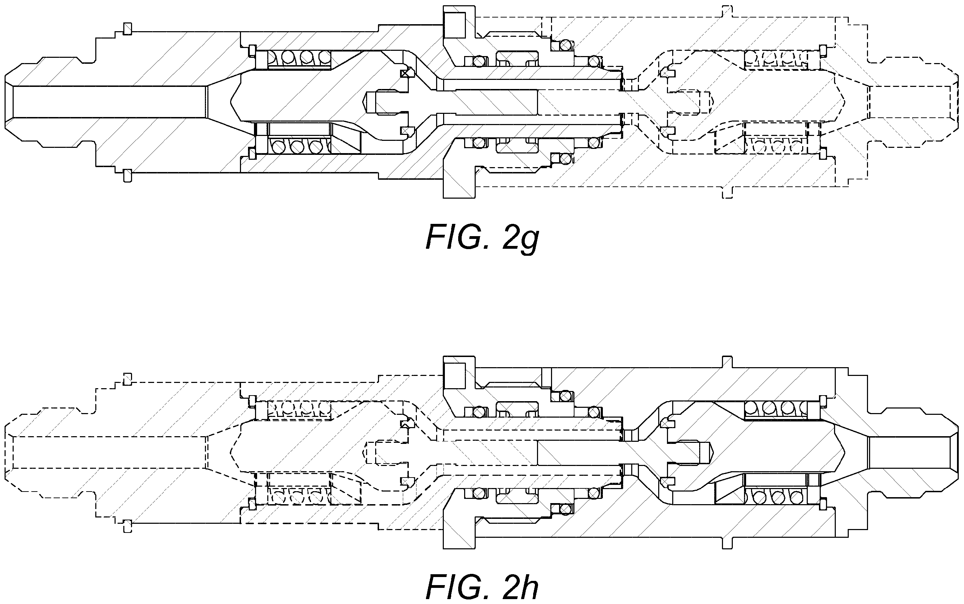

Figures 2e and 2f show flow coupler 200 in its entirety with male terminal 200m plugged into female terminal 200f, viewed respectively in cross-section through the axis, perpendicular to it (as in Figure 1a), and end-on. Figures 2g and 2h show the view of Figure 2e with respectively the female and male parts shown with dotted lines. The poppet armatures 211m and 211f meet in the middle and push on one another against springs 215m and 215f, settling in the position shown in which the substantially constant hydraulic diameter flow channels referred to above are opened up and linked to provide fluid communication between pipes 240m and 240f.

The internal parts of the male and female terminals are identical; the poppet arrangement of Figure 1a is used in both. The coupler is thus formed by a modular system, reducing manufacturing costs and allowing for flexibility in combinations of poppet arrangements and housings.

The connection between plug 222m and socket 222f is a tight plug fit, except for a small gap 222a provided by a groove in the tip of the plug to prevent vacuum locking making the coupler difficult to disconnect. The coupler connection is sealed by primary seal 241, with redundancy provided by secondary seal 242, tertiary seal 243 and quaternary seal 244, which will be described in more detail below. Such redundancy is especially important for subsea applications where flow couplers may need to function without maintenance for several decades. Strict regulations also apply to seals in this context due to the pollution risk posed by leaking petroleum and other chemicals. As shown, all four seals are provided affixed to the socket 222f of female housing 220f. However, the seals could alternatively be provided on plug 222m of male housing 220m or on a combination of plug 222m and socket 222f.

Example dimensions in mm for the components illustrated in Figures 2a to 2h for various pipe diameters are as follows.

| Cylindrical pipe internal diameter | Sectioned annular flow channel inner diameter | Sectioned annular flow channel outer diameter | Poppet body section and stopper section length | Annular flow channel inner diameter | Annular flow channel outer diameter | Poppet armature length |
|---|---|---|---|---|---|---|
| 5 | 6.2 | 10.1 | 40.5 | 3.9 | 7.8 | 15.6 |
| 8 | 7.4 | 12.0 | 48.2 | 4.6 | 9.3 | 18.5 |
| 11 | 8.6 | 14.0 | 55.8 | 5.4 | 10.8 | 21.5 |
| 14 | 9.3 | 15.0 | 60.2 | 5.8 | 11.6 | 23.1 |

The flow channel provided through the described flow coupler reduces pressure and speed changes through the coupler for the reasons described below. This is desirable since pressure/speed changes in the flow can introduce turbulence. The more turbulent the flow, the more erosion/degradation the internal parts of the coupler and pipes suffer. This is especially problematic in applications where maintenance/replacement of the coupler is difficult or impossible, and/or a long working lifetime is required, such as in deep subsea environments. Pressure drops will of course also impede fluid transport.

The Darcy-Weisbach equation for pressure loss is:

$$\Delta p = f . \frac{L}{D_h} . \frac{\rho u^2}{2} \tag{1}$$

where the pressure loss due to friction $\Delta p$ (Pa) is a function of:

- the Darcy Friction Factor, $f$, a (dimensionless) coefficient of laminar or turbulent flow
- the ratio of the length to hydraulic diameter of the pipe, $L/D_h$ (dimensionless), where the hydraulic diameter of a cylindrical pipe is simply its inner diameter; and
- the dynamic pressure, which depends on the density of the fluid, $\rho$ (kg/m$^3$) and the mean flow speed, $u$ (m/s).

For example, the pressure drop for turbulent flow through a cylindrical pipe of dimensions similar to a typical flow coupler can be calculated from parameters $D_h$ = 6.35 mm, $L$ = 10 mm, $u$ = 2.2 m/s, $\rho$ = 1000 kg/m$^3$ and $f$ = 0.03, where $f$ is estimated using the Colebrook equation:

$$\frac{1}{\sqrt{f}} = -2 \log_{10}\left( \frac{\varepsilon}{3.7 D_h} + \frac{2.51}{Re\sqrt{f}} \right) \tag{2}$$

based on Reynolds number, $Re$ = 12,400 (where

$$Re = \frac{\rho \cdot u \cdot D_h}{\mu}, \tag{3}$$

$\mu$ being the dynamic viscosity, 1.122 x 10$^{-3}$ kg/m.s) and assuming a negligible roughness height, $\varepsilon$. This gives a pressure drop of 114 Pa.

In general the hydraulic diameter of a flow channel is given by:

$$D_h = \frac{4A}{P}. \tag{4}$$

where $A$ is the cross sectional area and $P$ is the wetted perimeter of the cross-section.

For an annulus the hydraulic diameter is thus simply the difference between the inner and outer diameters. Keeping the other parameters the same as previously, for an annular pipe of inner diameter 15.2 mm the outer diameter required to provide the same flow area, and thus the same speed, as the cylindrical pipe is

$$\sqrt{(6.35 \text{ mm})^2 + (15.2 \text{ mm})^2} = 16.47 \text{ mm}.$$ $D_h$ is thus 1.27 mm. $f$ = 0.045, again from the Colebrook equation (2). The pressure drop is thus 857 Pa, approximately 7.5 times that of the cylindrical pipe.

This increase in pressure drop in an annular pipe compared to a cylindrical pipe is due to frictional losses from having two wall boundary layers instead of one. As can be seen from equation (1), this effect could be mitigated by reducing the flow speed.

Consider an annular pipe in which the hydraulic diameter is the same as for the cylindrical pipe, so the available flow area is larger than for the annular pipe considered above, and thus the speed is lower. $D_h$ = 6.35 mm = $D_o$ - $D_i$ (the difference between the inner and outer diameters), so if $D_o$ is, say, 21.55 mm, $D_i$ must be 15.2 mm. The volume flow rate through the cylindrical pipe was $\frac{\pi}{4}D_h{}^2 \cdot u = 6.97 \times 10^{-5} \text{ m}^3/\text{s}.$ So, keeping the volume flow rate and hydraulic diameter the same, the average flow speed through our annular pipe must be $\frac{4 \times 6.97 \times 10^{-5} \text{ m}^3/\text{s}}{\pi(D_o{}^2 - D_i{}^2)} = 0.38 \text{ m}/\text{s}.$

$Re$ in this case works out according to equation (3) as 2150, which indicates laminar flow, so $f$ can be taken as 64/$Re$, giving a pressure drop of 3.4 Pa.

However, this small pressure drop is due to the low dynamic pressure. So, although friction losses are reduced with respect to the previous annulus, a large part of the dynamic pressure head is lost, which is detrimental to fluid transport. So a compromise must be struck wherein the inner and outer diameters of an annular channel through a flow coupler should be chosen so as to reduce flow speed in order to reduce frictional losses, but without reducing it so much the dynamic pressure head falls too low.

For the design illustrated in Figures 2a-h, if the average flow speed in the pipes is 2.2 m/s, it will be approximately 1.1 m/s in the largest annular channel. The resulting pressure drop over the 120 mm length of the coupler is 7758 Pa, in contrast to the 1368 Pa drop that would occur for a 6.35 mm inner diameter pipe of the same length.

Another consideration in coupler design is the transitions between the pipes and coupler and between various coupler sections.

Considering a step increase in cylindrical pipe diameter as shown in Figure 3a, with the arrow showing the flow direction and parameters of

| | |
|---|---|
| Flow medium | Water 15 °C / liquid |
| Volume flow | 0.25 m$^3$/h |
| Weight density | 998.206 kg/m$^3$ |
| Dynamic Viscosity | 1122 x 10$^{-6}$ kg/ms |
| Element of pipe | Sudden expansion |
| D1 | 6.35 mm |
| D2 | 15.28 mm |
| Speed of flow 1 | 2.19 m/s |
| Reynolds number 1 | 12388 |
| Speed of flow 2 | 0.38 m/s |
| Reynolds number 2 | 5148 |
| Flow type | turbulent |
| Resistance coefficient | 22.95 |

the pressure drop can be calculated to be 1643 Pa, approximately two thirds of the dynamic pressure in the inlet flow.

For a mirrored step decrease in pipe diameter as shown in Figure 3b, with parameters of

| | |
|---|---|
| Flow medium | Water 15 °C / liquid |
| Volume flow | 0.25 m$^3$/h |
| Weight density | 998.206 kg/m$^3$ |
| Dynamic Viscosity | 1122 10-6 kg/ms |
| Element of pipe | Sudden contraction |
| D1 | 15.28 mm |
| D2 | 6.35 mm |
| Speed of flow 1 | 0.38 m/s |
| Reynolds number 1 | 5148 |

(continued)

| | |
|---|---|
| Speed of flow 2 | 2.19 m/s |
| Reynolds number 2 | 12388 |
| Flow type | turbulent |
| Resistance coefficient | 0.43 |

the pressure drop is 1041 Pa, greater than the total dynamic pressure.

For a smooth transition from D1 to D2 as shown in Figure 3c, the pressure drop varies with the half cone angle (i.e. the angle between the wall and the direction of flow) as shown in Figure 4.

The minimum pressure drop is for an angle of 3° and the maximum for 33°. However, an angle of 3° is unlikely to be practical as this corresponds to a very long transition length of 85mm.

For the design illustrated in Figures 2a-h, the angle between the inner housing wall and the axial flow chosen for the transition between the cylindrical pipe and the (partially) annular channel around the poppet body is 20°, though angles between 5 and 30° would be practical. The angle between the inner housing wall and the axial flow chosen for the transition between the (partially) annular channel around the poppet body and the annular channel around the poppet armature is 45°, though angles between 30 and 60° would be practical.

The velocity field for this design is shown in Figures 5a and 5b (wherein the length of the arrow indicates the speed of the flow) and figures 5c and 5d show the pressure field (where crossing a contour line from left to right indicates a pressure drop of 250 Pa). Figures 5a and 5c show a top-down view in which the cams are not visible, while Figures 5b and 5d show a side-on view (as in Figure 2e) where stagnation occurs around the cams. The model used was steady state for water at 15 °C with an inlet flow speed of 2.2 m/s. It can be seen that the regions around the stopper section of the poppet suffer the worst pressure losses. This is because in these regions flow optimisation must be balanced against the need to ensure a good seal is created when the coupler is disconnected.

Figures 6a and 6b illustrate an alternative coupler design viewed respectively in cross-section through the axis, perpendicular to it (as in Figure 2e), and end-on (as in Figure 2f). In this design, ball bearings 619 are used in place of cams. Instead of springs encircling the flow channel, springs 615 encircle the poppet body sections 613. They are still not exposed to the flow channel however, since they are covered by spring covers/housings 615a.

In this example, the channel splitter is provided by spring cover 615a and ball bearing 619. Again, at least a part of the channel splitter overlaps with the spring axially, allowing for a compact design.

The coupler ends of the armatures are shown in the figures as planar surfaces, perpendicular to the poppet axes. However, they could alternatively have surfaces shaped to interlock with one another. For example, the end of the armature of the male terminal's poppet could be in the form of a cone and the end of the armature of the female terminal's poppet could be in the form of a recess shaped to receive said cone, or vice-versa. Other interlocking shapes could be envisaged. Such an interlock would provide stability to the poppets with respect to their springs. The guiding supports, such as the cams or ball bearings described above, might therefore be done away with or made smaller if an armature end interlock is employed.

Though the poppet valves described herein comprise helical coil springs, any biasing means could be used. For example gas springs or leaf springs could be employed.

In the illustrated examples, three guiding supports are used (whether in the form of cams or ball bearings), dispersed at 120° angles around the poppet circumference. This ensures stable sliding of the poppet within the housing with the minimum disruption to the flow channel. However, even more stability could be provided by including further guiding supports. The guiding supports need not be evenly distributed around the poppet circumference so long as their number and location provide for stable sliding of the poppet.

Figures 7a and 7b show respectively a cross sectional side view and a front view of Multiple Quick Connect (MQC) stab plates 760 which can be used to connect and disconnect multiple (in this case 6) couplers at once. This can be done with the aid of an ROV (Remotely operated underwater vehicle) which has an arm which can be fitted into bucket 770. The ROV can then rotate its arm in one direction to simultaneously connect all the couplers, and in the other direction to simultaneously disconnect them.

Figure 8 illustrates an example seal structure that could be used in a female coupler terminal. Housing 820f is provided with primary dynamic seal 841, which acts as a barrier against escape of the internal fluid and may, for example be elastomeric or metallic (the other seals will generally be elastomeric). Redundancy is provided by a static secondary seal 842 fixed between the two screwed parts of the female coupler, which does not face any sliding surfaces at any time. Quaternary dynamic seal 844 (for example an O-ring) acts as a barrier against ingress of seawater, with redundancy provided by dynamic tertiary seal 843, which can optionally be a T-seal as shown.

Different seal materials can be used depending on the circumstances. Spring energised PTFE is suitable for most applications. Elastoloy 985 is generally suitable for high temperature applications and Elastoloy 101 for low temperature applications. Fluor elastomer may be used for tough chemicals and high temperatures. A silver or gold coated Inconel (metallic) seal may be used for slurry, gas and very high temperatures. Different combinations of seals may also be appropriate depending on requirements. For example, the combinations shown in the following table might be used.

|  | Standard | Tough chemical and/or high temperature | Low cost | Sediment present in fluid |
|---|---|---|---|---|
| **Primary** | Spring energised PTFE | Fluor elastomer | Elastoloy 985 | Silver or gold coated Inconel |
| **Secondary** | Elastoloy 101 | Fluor elastomer | Elastoloy 101 | Elastoloy 101 |
| **Tertiary** | Elastoloy 985 | Fluor elastomer | Elastoloy 101 | Elastoloy 985 |
| **Quaternary** | Elastoloy 985 | Fluor elastomer | Elastoloy 985 | Elastoloy 985 |

The poppet sealing ring will generally be provided in the same material as the primary seal.

Materials chosen for subsea flow couplers must adhere to certain standards, for example metallic component must meet the NORSOK M-001 standard. The lowest allowable stainless grade 316 is normally too weak for high pressure equipment, but a much used material for this type of equipment is the alloy with trade name NITRONIC 50 (UNS S20910) having chemistry 22% Cr, 12.5% Ni, 5% Mn, 2.25% Mo, 1% Si, 0.06% C, Fe to balance. This provides a combination of corrosion resistance, ease of manufacture and strength not found in any other commercial material available in its price range. To meet more stringent requirements and deal with high mechanical stresses and exposure to sea water high cost nickel alloys in the Inconel family, typically Inconel 625 (UNS N06625 and higher grades for springs), may be chosen (chemistry 58% Ni, 21.5% Cr, 9% Mo, 0.5% Mn, 0.1% C, 0.5% Si, 5% Fe). This has excellent mechanical properties at both extremely low and extremely high temperatures, outstanding resistance to pitting, crevice corrosion and inter-crystalline corrosion and almost complete freedom from chloride induced stress corrosion cracking. It is also easy to manufacture.

The apparatus and methods disclosed herein are particularly suited for subsea hydraulic control systems and chemical injection for oil and gas wells. However, they could also be applicable in other scenarios, including for example hydraulic and pneumatic power/braking systems, cooling circuits, water supply and fuelling systems. Applications could be found in industries such as aerospace, robotics, motorsport, transit, air conditioning, heavy machinery, agriculture, utility supply etc.

Other embodiments will be apparent to those skilled in the art from consideration of the specification and practice of the embodiments disclosed herein. It is intended that the specification and examples be considered as exemplary only.

## Claims

1. A poppet valve (110) arrangement comprising:

   a poppet valve (110) comprising a biasing device (115); and
   a housing comprising an inlet, an outlet and a flow channel configured to provide fluid communication between said inlet and said outlet when said poppet valve (110) is open; wherein:

   said fluid communication provided by said flow channel is blocked by the poppet valve (110) under action of said biasing device (115) when the poppet valve (110) is closed; and
   the poppet valve (110) is supported with respect to the housing by a channel splitter that radially sections the flow channel into a sectioned substantially annular flow channel portion around the poppet valve (110); wherein, when said poppet valve is open, said channel splitter provides said sectioned substantially annular flow channel portion along all of the biasing device's axial extent; and
   said channel splitter is provided along the length of the poppet valve (110) such that, the flow channel has a substantially constant hydraulic diameter from the inlet to the outlet of the housing.

2. The arrangement of claim 1, wherein said channel splitter comprises a guiding support (119) in contact with an interior wall of said housing but moveable with respect to said interior wall.

3. The arrangement of claim 2, wherein either said guiding support (119) is a cam (119) extending from a body portion of the poppet valve, or said guiding support is a ball bearing.

4. The arrangement of any preceding claim, wherein said sectioned substantially annular flow channel portion comprises three radial sections.

5. The arrangement of any preceding claim, wherein said biasing device (115) comprises a spring; and wherein coils of said spring (115) are substantially shielded from the flow channel by a spring cover.

6. A terminal for terminating a fluid-carrying pipe, said terminal comprising the arrangement of any preceding claim configured to terminate said pipe when the poppet valve (110) of the terminal is closed; wherein the poppet valve (110) is configured to cooperate with a corresponding poppet valve of another terminal to open both poppet valves.

7. The terminal according to claim 6, wherein the terminal is for use in a subsea environment.

8. A coupling system comprising a plurality of the terminals of claims 6 or 7 fixed into a connector plate.

9. A coupling system comprising:

   a first housing comprising a first pipe end and a first coupler end;
   a first poppet valve (110) arrangement according to any of claims 1 to 5 within the first housing, the first poppet valve (110) arrangement comprising a stopper, wherein the biasing device (115) of the first poppet valve (110) arrangement is arranged to bias the stopper towards a position in which a first flow channel for providing fluid communication between said first pipe end and said first coupler end is blocked;
   a second housing comprising a second pipe end and a second coupler end;
   a second poppet valve arrangement according to any of claims 1 to 5 within the second housing, the second poppet valve arrangement comprising a stopper, wherein the biasing device of the second poppet value arrangement is arranged to bias the stopper towards a position in which a second flow channel for providing fluid communication between said second pipe end and second coupler end is blocked;
   wherein the first and second housings are configured to cooperate with one another such that the biasing devices act against one another to open the poppet valves of the first and second poppet valve arrangements so as to permit fluid communication between the first and second pipe ends.

10. Assembly of a poppet valve (110) arrangement, a terminal and a pipe ;
    wherein the poppet valve arrangement is according to claims 1 to 5 and is comprised by said terminal which is connected to an end of said pipe ;
    wherein the flow channel has a substantially constant hydraulic diameter from the pipe to the outlet of the housing, said hydraulic diameter being substantially equal to the hydraulic diameter of the pipe.

11. A method of opening a valve connection between first and second fluid-carrying pipes, wherein the first fluid-carrying pipe comprises a terminal according to claim 6 or 7 and the second fluid-carrying pipe comprises a terminal according to claim 6 or 7, said method comprising simultaneously opening the poppet valves of each terminal by mutual action of the poppet valves upon one another.

**Patentansprüche**

1. Tellerventil(110)-Anordnung, umfassend:

   ein Tellerventil (110), umfassend eine Vorspannvorrichtung (115); und
   ein Gehäuse, umfassend einen Einlass, einen Auslass und einen Strömungskanal, der konfiguriert ist, Fluidverbindung zwischen dem Einlass und dem Auslass bereitzustellen, wenn das Tellerventil (110) geöffnet ist; wobei:

   die durch den Strömungskanal bereitgestellte Fluidverbindung durch das Tellerventil (110) unter Wirkung der Vorspannvorrichtung (115) blockiert wird, wenn das Tellerventil (110) geschlossen ist; und
   das Tellerventil (110) in Bezug auf das Gehäuse durch einen Kanalteiler getragen wird, der den Strömungskanal in einen aufgeteilten im Wesentlichen ringförmigen Strömungskanalteil um das Tellerventil (110) herum radial aufteilt;
   wobei, wenn das Tellerventil geöffnet ist, der Kanalteiler den aufgeteilten im Wesentlichen ringförmigen Strömungskanalteil entlang der gesamten axialen Erstreckung der Vorspannvorrichtung bereitstellt; und der Kanalteiler entlang der Länge des Tellerventils (110) derart bereitgestellt ist, dass der Strömungskanal einen im Wesentlichen konstanten hydraulischen Durchmesser von dem Einlass zu dem Auslass des Gehäuses aufweist.

2. Anordnung nach Anspruch 1, wobei der Kanalteiler einen Führungsträger (119) in Kontakt mit einer Innenwand des Gehäuses, aber in Bezug auf die Innenwand bewegbar umfasst.

3. Anordnung nach Anspruch 2, wobei entweder der Führungsträger (119) ein Nocken (119) ist, der sich von einem Körperteil des Tellerventils erstreckt, oder der Führungsträger ein Kugellager ist.

4. Anordnung nach einem vorhergehenden Anspruch, wobei der aufgeteilte im Wesentlichen ringförmige Strömungskanalteil drei radiale Abschnitte umfasst.

5. Anordnung nach einem vorhergehenden Anspruch, wobei die Vorspannvorrichtung (115) eine Feder umfasst; und wobei Windungen der Feder (115) im Wesentlichen von dem Strömungskanal durch eine Federabdeckung abgeschirmt sind.

6. Anschluss zum Abschließen eines fluidführenden Rohrs, wobei der Anschluss die Anordnung nach einem vorhergehenden Anspruch umfasst, die konfiguriert ist, das Rohr abzuschließen, wenn das Tellerventil (110) des Anschlusses geschlossen ist;
wobei das Tellerventil (110) konfiguriert ist, mit einem entsprechenden Tellerventil eines anderen Anschlusses zusammenzuwirken, um beide Tellerventile zu öffnen.

7. Anschluss nach Anspruch 6, wobei der Anschluss zur Verwendung in einer Unterwasserumgebung ist.

8. Kupplungssystem, umfassend eine Vielzahl der Anschlüsse nach Ansprüchen 6 oder 7, die in einer Verbindungsplatte fixiert sind.

9. Kupplungssystem, umfassend:

ein erstes Gehäuse, umfassend ein erstes Rohrende und ein erstes Kupplungsende;
eine erste Tellerventil(110)-Anordnung nach einem der Ansprüche 1 bis 5 im ersten Gehäuse, wobei die erste Tellerventil(110)-Anordnung einen Stopfen umfasst, wobei die Vorspannvorrichtung (115) der ersten Tellerventil(110)-Anordnung angeordnet ist, um den Stopfen zu einer Position, in der ein erster Strömungskanal zum Bereitstellen von Fluidverbindung zwischen dem ersten Rohrende und dem ersten Kupplungsende blockiert ist, vorzuspannen;
ein zweites Gehäuse, umfassend ein zweites Rohrende und ein zweites Kupplungsende;
eine zweite Tellerventil-Anordnung nach einem der Ansprüche 1 bis 5 im zweiten Gehäuse, wobei die zweite Tellerventil-Anordnung einen Stopfen umfasst, wobei die Vorspannvorrichtung der zweiten Tellerventil-Anordnung angeordnet ist, um den Stopfen zu einer Position, in der ein zweiter Strömungskanal zum Bereitstellen von Fluidverbindung zwischen dem zweiten Rohrende und dem zweiten Kupplungsende blockiert ist, vorzuspannen:

wobei das erste und zweite Gehäuse konfiguriert sind, derart miteinander zusammenzuwirken, dass die Vorspannvorrichtungen gegeneinander wirken, um die Tellerventile der ersten und zweiten Tellerventil-Anordnung zu öffnen, um Fluidverbindung zwischen dem ersten und zweiten Rohrende zuzulassen.

10. Montage einer Tellerventil(110)-Anordnung, eines Anschlusses und eines Rohrs;
wobei die Tellerventil-Anordnung nach Ansprüchen 1 bis 5 ist und von dem Anschluss umfasst wird, der mit einem Ende des Rohrs verbunden ist;
wobei der Strömungskanal einen im Wesentlichen konstanten hydraulischen Durchmesser von dem Rohr zu dem Auslass des Gehäuses aufweist, wobei der hydraulische Durchmesser im Wesentlichen gleich dem hydraulischen Durchmesser des Rohrs ist.

11. Verfahren eines Öffnens einer Ventilverbindung zwischen einem ersten und zweiten fluidführenden Rohr, wobei das erste fluidführende Rohr einen Anschluss nach Anspruch 6 oder 7 umfasst und das zweite fluidführende Rohr einen Anschluss nach Anspruch 6 oder 7 umfasst, wobei das Verfahren ein gleichzeitiges Öffnen der Tellerventile jedes Anschlusses durch gemeinsame Wirkung der Tellerventile aufeinander umfasst.

**Revendications**

1. Agencement à soupape-champignon (110), comprenant :

   une soupape-champignon (110) comprenant un dispositif de sollicitation (115) ; et
   un logement comprenant une entrée, une sortie et un canal d'écoulement configuré pour fournir une communication fluidique entre ladite entrée et ladite sortie lorsque ladite soupape-champignon (110) est ouverte ; dans lequel :

   ladite communication fluidique fournie par ledit canal d'écoulement est bloquée par la soupape-champignon (110) sous l'action dudit dispositif de sollicitation (115) lorsque la soupape-champignon (110) est fermée ; et
   la soupape-champignon (110) est supportée par rapport au logement par un diviseur de canal qui sectionne radialement le canal d'écoulement en une portion de canal d'écoulement sectionnée sensiblement annulaire autour de la soupape-champignon (110) ;
   dans lequel, lorsque ladite soupape-champignon est ouverte, ledit diviseur de canal fournit ladite portion de canal d'écoulement sectionnée sensiblement annulaire le long de la totalité de l'étendue axiale du dispositif de sollicitation ; et
   ledit diviseur de canal est prévu le long de la longueur de la soupape-champignon (110) de telle sorte que le canal d'écoulement ait un diamètre hydraulique sensiblement constant depuis l'entrée jusqu'à la sortie du logement.

2. Agencement selon la revendication 1, dans lequel ledit diviseur de canal comprend un support de guidage (119) en contact avec une paroi intérieure dudit logement mais mobile par rapport à ladite paroi intérieure.

3. Agencement selon la revendication 2, dans lequel ledit support de guidage (119) est une came (119) s'étendant à partir d'une portion de corps de la soupape-champignon, ou ledit support de guidage est un roulement à billes.

4. Agencement selon une quelconque revendication précédente, dans lequel ladite portion de canal d'écoulement sectionnée sensiblement annulaire comprend trois sections radiales.

5. Agencement selon une quelconque revendication précédente, dans lequel ledit dispositif de sollicitation (115) comprend un ressort ; et
   dans lequel des spires dudit ressort (115) sont sensiblement protégées du canal d'écoulement par un couvre-ressort.

6. Terminal pour terminer un tuyau de transport de fluide, ledit terminal comprenant l'agencement d'une quelconque revendication précédente configuré pour terminer ledit tuyau lorsque la soupape-champignon (110) du terminal est fermée ;
   dans lequel la soupape-champignon (110) est configurée pour coopérer avec une soupape-champignon correspondante d'un autre terminal pour ouvrir les deux soupapes-champignons.

7. Terminal selon la revendication 6, dans lequel le terminal est destiné à être utilisé dans un environnement sous-marin.

8. Système de couplage, comprenant une pluralité des terminaux des revendications 6 ou 7 fixés dans une plaque de raccordement.

9. Système de couplage, comprenant :

   un premier logement comprenant une première extrémité de tuyau et une première extrémité de couplage ;
   un premier agencement à soupape-champignon (110) selon l'une quelconque des revendications 1 à 5 à l'intérieur du premier logement, le premier agencement à soupape-champignon (110) comprenant une butée, dans lequel le dispositif de sollicitation (115) du premier agencement à soupape-champignon (110) est agencé pour solliciter la butée vers une position dans laquelle un premier canal d'écoulement pour fournir une communication fluidique entre ladite première extrémité de tuyau et ladite première extrémité de couplage est bloqué ;
   un second logement comprenant une seconde extrémité de tuyau et une seconde extrémité de couplage ;
   un second agencement à soupape-champignon selon l'une quelconque des revendications 1 à 5 à l'intérieur du second logement, le second agencement à soupape-champignon comprenant une butée, dans lequel le dispositif de sollicitation du second agencement à soupape-champignon est agencé pour solliciter la butée vers une position dans laquelle un second canal d'écoulement pour fournir une communication fluidique entre ladite seconde extrémité de tuyau et ladite seconde extrémité de couplage est bloqué ;

dans lequel les premier et second logements sont configurés pour coopérer l'un avec l'autre de telle sorte que les dispositifs de sollicitation agissent l'un contre l'autre pour ouvrir les soupapes-champignons des premier et second agencements à soupape-champignon afin de permettre la communication fluidique entre les première et seconde extrémités de tuyau.

10. Ensemble d'un agencement à soupape-champignon (110), d'un terminal et d'un tuyau ;

dans lequel l'agencement à soupape-champignon est selon les revendications 1 à 5 et est compris par ledit terminal qui est raccordé à une extrémité dudit tuyau ;

dans lequel le canal d'écoulement a un diamètre hydraulique sensiblement constant depuis le tuyau jusqu'à la sortie du logement, ledit diamètre hydraulique étant sensiblement égal au diamètre hydraulique du tuyau.

11. Procédé d'ouverture d'un raccord à valve entre des premier et second tuyaux de transport de fluide, dans lequel le premier tuyau de transport de fluide comprend un terminal selon la revendication 6 ou 7 et le second tuyau de transport de fluide comprend un terminal selon la revendication 6 ou 7, ledit procédé comprenant l'ouverture simultanée des soupapes-champignons de chaque terminal par action mutuelle des soupapes-champignons l'une sur l'autre.

115  115a  119  117  114

120

112

115a  113  115  118  130  114

**FIG. 1a**

110

119

111a

111

114

119

113

**FIG. 1b**

116

111

FIG. 2a

FIG. 2b

200f

220f

222f  214f  215f  210f

221f

240f

212f  250f

## FIG. 2c

← D

D →

## FIG. 2d

FIG. 2e

FIG. 2f

*FIG. 2g*

*FIG. 2h*

FIG. 3a

FIG. 3b

FIG. 3c

*FIG. 4*

Z
Y
X

*FIG. 5a*

Z
Y
X

*FIG. 5b*

*FIG. 5c*

*FIG. 5d*

619     619     615

613  615  615a           613  615a

## FIG. 6a

B →

B →

## FIG. 6b

FIG. 7a

EP 3 158 248 B1

770

FIG. 7b

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2493261 A
- EP 1953440 A1
- DE 4340321 A1